# EUROPEAN PATENT APPLICATION

(11) **EP 3 342 522 A1**
(43) Date of publication of application: **04.07.2018**
(21) Application number: 16839230.6
(22) Date of filing: 22.08.2016
(51) Int. Cl.: B23K 9/127, B23K 9/12, B23K 9/28

(54) **AUTOMATIC WELDING MACHINE**

(30) Priority: 27.08.2015 JP 2015167601
(71) Applicant: NTN Corporation, Osaka-shi, Osaka 550-0003 (JP)
(72) Inventor: KONAGAI, Naoya, Iwata-shi Shizuoka 438-8510 (JP); ISOBE, Hiroshi, Iwata-shi Shizuoka 438-8510 (JP); SAKATA, Seigo, Iwata-shi Shizuoka 438-8510 (JP); YAMADA, Hiroyuki, Iwata-shi Shizuoka 438-8510 (JP)
(74) Representative: Maikowski & Ninnemann Patentanwälte Partnerschaft mbB
(86) International application number: PCT/JP2016/074354
(87) International publication number: WO 2017/033883

(57) **Abstract**

An automatic welding machine includes a link actuator in which a distal end side link hub is coupled to a proximal end side link hub via three or more link mechanisms and the position of the distal end side link hub relative to the proximal end side link hub can be arbitrarily changed. The automatic welding machine is provided with one or more linear motion actuators configured to cause the proximal end side link hub of the link actuator to advance/retract relative to a mount along respective axes, and a welding torch is mounted on the distal end side link hub. The automatic welding machine further includes a movement mechanism on which peripheral devices connected to the welding torch via cables are mounted so as to be movable in one or more axial directions.

## Description

### CROSS REFERENCE TO THE RELATED APPLICATION

This application is based on and claims Convention priority to Japanese patent application No. 2015-167601, filed August 27, 2015, the entire disclosure of which is herein incorporated by reference as a part of this application.

### BACKGROUND OF THE INVENTION

### (Field of the Invention)

The present invention relates to an automatic welding machine that is used in a manufacturing process or the like and that can perform automatic fine welding work at high speed with high accuracy, without manpower.

### (Description of Related Art)

Conventional automatic welding machines are generally equipped with a welding torch at a distal end of an articulated robot as proposed in Patent Documents 1 to 3. These automatic welding machines using the articulated robot have an advantage in having a wide work range. On the other hand, in the automatic welding machines using the articulated robot, the size of a robot body is large, and thus, in consideration of the operation range or the like, a wide occupation space is required for installing the machine. In addition, the articulated robot includes a plurality of shafts, and thus with the conventional automatic welding machines, fine motion cannot be made at high speed and it is difficult to perform precise welding.

Thus, an automatic welding machine that has a compact configuration but can achieve fine motion at high speed with high accuracy has been devised by combining a link actuator and one or more linear motion actuators (Patent Document 4). The link actuator is a device that has a parallel link mechanism in which a distal end side link hub is coupled to a proximal end side link hub via three or more quadric chain link mechanisms such that the position of the distal end side link hub can be changed relative to the proximal end side link hub, and the position of the distal end side link hub relative to the proximal end side link hub is changed to an arbitrary position by driving the parallel link mechanism with a position change actuator.

### [Related Document]

### [Patent Document]

[Patent Document 1] JP Laid-open Patent Publication No. H06-079472
[Patent Document 2] JP Laid-open Patent Publication No. 2002-120093
[Patent Document 3] JP Laid-open Patent Publication No. 2010-253538
[Patent Document 4] JP Laid-open Patent Publication No. 2015-100802

### SUMMARY OF THE INVENTION

However, in the above automatic welding machines using the link actuator, peripheral devices such as a cooling water device and a wire supply device are connected to a welding torch via cables, and thus tension may be applied to the welding torch due to welding motion, so that the accuracy of positioning the tip of the welding torch may be decreased.

An object of the present invention is to provide an automatic welding machine that has a compact configuration but can make fine motion at high speed with high accuracy and prevents the accuracy of positioning the tip of a welding torch from being decreased due to welding motion.

An automatic welding machine of the present invention includes: a link actuator including three or more link mechanisms coupling a distal end side link hub to a proximal end side link hub such that a position of the distal end side link hub can be changed relative to the proximal end side link hub, each link mechanism including a proximal side end link member pivotably coupled at one end thereof to the proximal end side link hub, a distal side end link member pivotably coupled at one end thereof to the distal end side link hub, and an intermediate link member with its opposite ends pivotably coupled to the other end of the proximal side end link member and to the other end of the distal side end link member, respectively, a position change actuator configured to arbitrarily change the position of the distal end side link hub relative to the proximal end side link hub, the position change actuator being provided in each of two or more link mechanisms of the three or more link mechanisms; one or more linear motion actuators configured to cause the proximal end side link hub of the link actuator to advance/retract relative to a mount along respective axes; a welding torch mounted on the distal end side link hub; and a movement mechanism on which peripheral devices connected to the welding torch via cables are mounted so as to be movable in one or more axial directions.

In the link actuator used in the automatic welding machine, the proximal end side link hub, the distal end side link hub, and the three or more link mechanisms form a two-degrees-of-freedom mechanism in which the distal end side link hub is rotatable about two axes orthogonal to each other, relative to the proximal end side link hub. The two-degrees-of-freedom mechanism is compact in size, but can achieve a wide range of movement of the distal end side link hub. In addition, since the two-degrees-of-freedom mechanism is compact in size, quick motion can be made. For example, the maximum bend angle between a central axis of the proximal end side link hub and a central axis of the distal end side link hub is about ±90°, and an angle of traverse of the distal end side link hub relative to the proximal end side link hub can be set in the range of 0° to 360°. By controlling operation of each position change actuator, the position of the distal end side link hub relative to the proximal end side link hub can be arbitrarily changed.

The automatic welding machine performs welding on a work with the welding torch, which is mounted on the distal end side link hub, while causing the link actuator to advance/retract by the one or more linear motion actuators and operating the link actuator to change the position of the distal end side link hub relative to the proximal end side link hub. Accordingly, welding can be performed on surfaces of the work in a plurality of directions at angles formed relative to the work. In addition, the link actuator having the welding torch mounted thereon has a wide movable range of the distal end side link hub and can make quick motion, and thus can achieve fine motion of the tip of the welding torch at high speed. Therefore, precise welding work can be performed on the work.

Force is applied to the cables, which connect the welding torch to the peripheral devices, due to the above welding motion, that is, advancement/retraction of the link actuator or position change of the link actuator. However, since the peripheral devices are mounted on the movement mechanism which moves the peripheral devices in one or more axial directions, the peripheral devices move in a direction in which force applied to the cables is absorbed, whereby tension being applied to the welding torch is reduced. Thus, a decrease in the accuracy of positioning the tip of the welding torch is avoided.

According to one embodiment of the present invention, the automatic welding machine may be an automatic welding machine with MIG welding, and at least one of the peripheral devices may be a wire supply device configured to send a welding wire to the welding torch. The cable that connects the wire supply device to the welding torch is hard since a wire is present within the cable. Thus, if the position of the wire supply device is fixed, tension is easily transmitted to the welding torch due to movement of the link actuator by the linear motion actuators or position change of the link actuator. However, since the peripheral devices including the wire supply device are mounted on the movement mechanism, tension being applied to the welding torch can be reduced, so that a decrease in the accuracy of positioning the tip of the welding torch can be prevented. That is, in the case of an automatic welding machine with MIG welding, the advantageous effect to be achieved by providing the movement mechanism appears particularly significant.

In one embodiment of the present invention, the movement mechanism may be configured to passively move the peripheral devices, a direction in which the movement mechanism passively moves the peripheral devices may coincide with a direction in which each linear motion actuator causes the link actuator to advance/retract, and the number of axial directions in which the movement mechanism passively moves the peripheral devices may be equal to the number of axial directions in which the linear motion actuators cause the link actuator to advance/retract. With this configuration, the peripheral devices can be moved by the movement mechanism to advancing/retracting movement of the link actuator by the linear motion actuator. Thus, tension being applied to the welding torch due to any advancing/retracting movement of the link actuator can be reduced, so that a decrease in the accuracy of positioning the tip of the welding torch can be prevented.

In one embodiment of the present invention, the movement mechanism may be a rotating mechanism configured to rotate about an axis in a direction perpendicular to a plane including axes of the one or more linear motion actuators. In this case, the peripheral devices can be moved by the movement mechanism, similar to some extent to the advancing/retracting movement of the link actuator by the linear motion actuators. Accordingly, similar to the above, tension being applied to the welding torch due to a welding motion can be reduced, so that a decrease in the accuracy of positioning the tip of the welding torch can be prevented. Since the rotating mechanism is a mechanism with a degree of freedom in one axis, the rotating mechanism has a simple structure and can be produced at low cost.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a front view of an automatic welding machine according to one embodiment of the present invention, in which a part thereof is omitted;
Fig. 2 is a plan view of the automatic welding machine, in which a part thereof is omitted;
Fig. 3 is a perspective view showing a link actuator, etc. of the automatic welding machine;
Fig. 4 is a transverse cross-sectional view of a proximal end side link hub, etc. of the link actuator;
Fig. 5 is a transverse cross-sectional view of a distal end side link hub, etc. of the link actuator;
Fig. 6 is a diagram showing a link mechanism of the link actuator depicted with straight lines;
Fig. 7 is a cross-sectional view of a portion where a welding torch is mounted on the proximal end side link hub of the link actuator;
Fig. 8 is a diagram showing an example of welding motion by the automatic welding machine according to the embodiment of the present invention;
Fig. 9 is a front view of an automatic welding machine according to another embodiment of the present invention, in which a part thereof is omitted;
Fig. 10 is a plan view of the automatic welding machine, in which a part thereof is omitted;
Fig. 11 is a front view of an automatic welding machine according to still another embodiment of the present invention, in which a part thereof is omitted;
Fig. 12 is a plan view of the automatic welding machine, in which a part thereof is omitted;
Fig. 13 is a front view of an automatic welding machine according to still another embodiment of the present invention, in which a part thereof is omitted; and
Fig. 14 is a plan view of the automatic welding machine, in which a part thereof is omitted.

### DESCRIPTION OF EMBODIMENTS

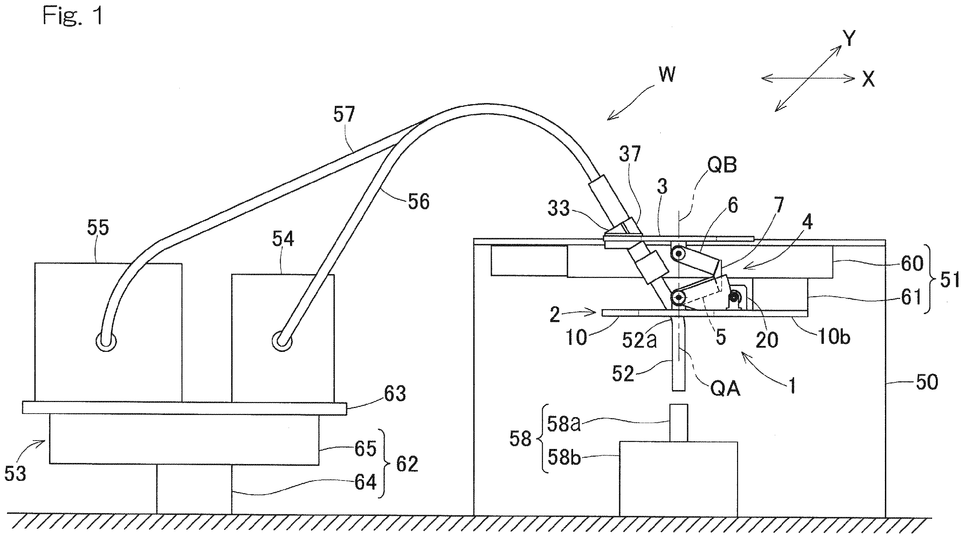

An embodiment of the present invention will be described with reference to Fig. 1 to Fig. 7.

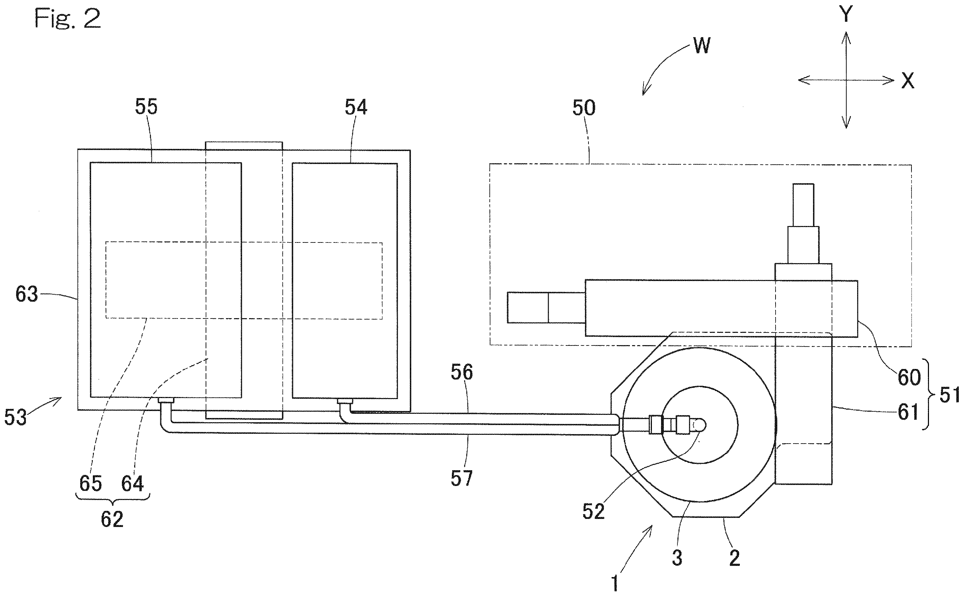

As shown in Fig. 1 and Fig. 2, an automatic welding machine W is an automatic welding machine with MIG (Metal Inert Gas) welding, wherein: a link actuator 1 is mounted on a mount 50 fixed to the ground (or a workbench), via a linear motion mechanism 51; and a welding torch 52 is mounted on the link actuator 1. In addition, a movement mechanism 53 is mounted on the ground and at a location away from the mount 50, and a wire supply device 54 and a cooling water device 55, which are peripheral devices, are mounted on the movement mechanism 53. The wire supply device 54 and the cooling water device 55 are connected to the welding torch 52 via cables 56 and 57, respectively.

The linear motion mechanism 51 includes an XY stage including two linear motion actuators which are combined with each other and have respective axes, that is, an X-axis and a Y-axis. Specifically, the linear motion mechanism 51 includes: an X-axis linear motion actuator 60 that is fixed to the mount 50 and that advances/retracts in the right-left direction in Fig. 1 (the X-axis direction); and a Y-axis linear motion actuator 61 that is fixed to a stage provided on the bottom surface of the X-axis linear motion actuator 60 and that advances/retracts in a front-rear direction in Fig. 1 (the Y-axis direction). The bottom surface of the Y-axis linear motion actuator 61 serves as a stage on which the link actuator 1 is mounted. The X-axis linear motion actuator 60 is fixed to the mount 50 by means of a bolt or the like, and the Y-axis linear motion actuator 61 is fixed to the X-axis linear motion actuator 60 by means of a bolt or the like.

In the movement mechanism 53, a base 63 on which the wire supply device 54 and the cooling water device 55 are placed is provided on an XY stage 62. The XY stage 62 includes: a Y stage 64 provided on the ground; and an X stage 65 provided on the Y stage 64, and the base 63 is provided on the X stage 65. The Y stage 64 and the X stage 65 are each composed of a linear rail, a linear guide, or the like. The movement mechanism 53 does not have a power source. That is, the XY stage 62 is configured to passively move the base 63 in the right-left direction (X-axis direction) and the front-rear direction (Y-axis direction) in accordance with external force applied to the wire supply device 54 or the cooling water device 55.

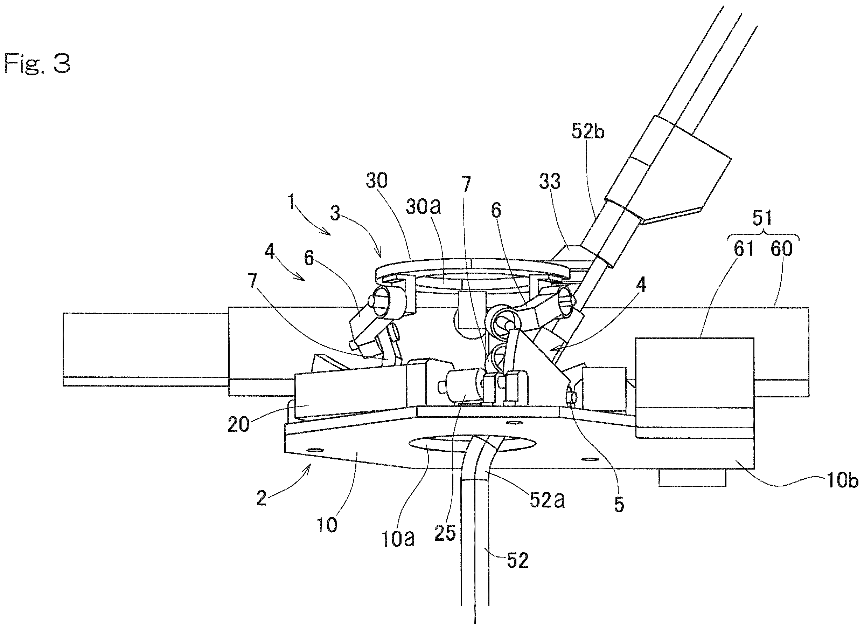

Next, the link actuator 1 will be described. As shown in Fig. 3, the link actuator 1 includes three link mechanisms 4, and a distal end side link hub 3 is coupled to a proximal end side link hub 2 via the three link mechanisms 4 such that the position of the distal end side link hub 3 can be changed relative to the proximal end side link hub 2 in the link actuator 1. Each link mechanism 4 includes a proximal side end link member 5, a distal side end link member 6, and an intermediate link member 7, and forms a quadric chain link mechanism including four revolute pairs. The proximal side end link member 5 is pivotably coupled at one end thereof to the proximal end side link hub 2, and the distal side end link member 6 is pivotably coupled at one end thereof to the distal end side link hub 3. The intermediate link member 7 has opposite ends to which the other end of the proximal side end link member 5 and the other end of the distal side end link member 6 are pivotably coupled, respectively.

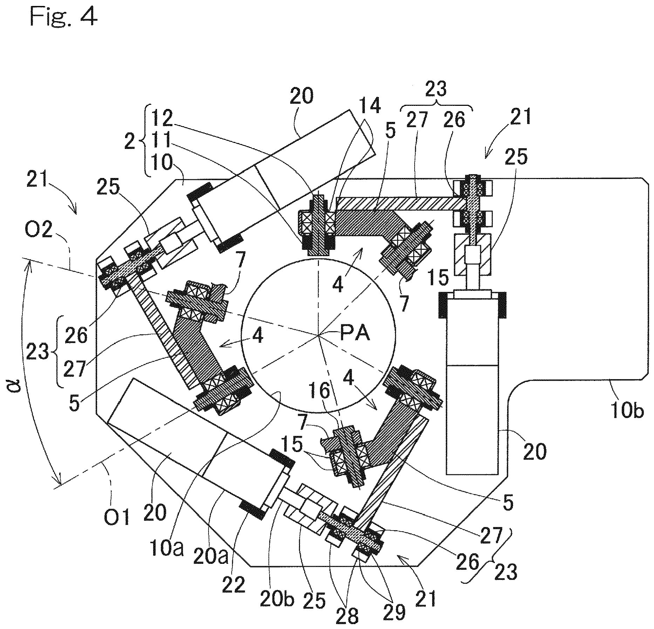

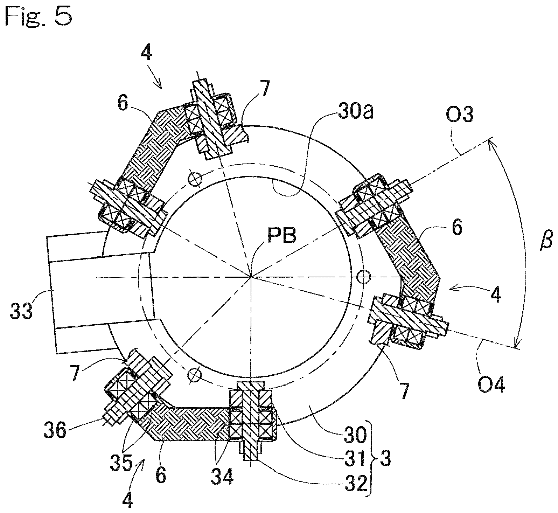

Fig. 4 is a transverse cross-sectional view of the proximal end side link hub, etc., and Fig. 5 is a transverse cross-sectional view of the distal end side link hub, etc. As shown in those drawings, the link actuator 1 is configured by combining two spherical link mechanisms, and the central axes of the revolute pairs between the link hubs 2 and 3 and the end link members 5 and 6 and the central axes of the revolute pairs between the end link members 5 and 6 and the intermediate link member 7 intersect each other at proximal and distal end side spherical link centers PA and PB at the proximal end side and the distal end side. In addition, at the proximal end side and the distal end side, the distances from the spherical link centers PA and PB to the revolute pairs between the link hubs 2 and 3 and the end link members 5 and 6 are equal to each other, and the distances from the spherical link centers PA and PB to the revolute pairs between the end link members 5 and 6 and the intermediate link member 7 are also equal to each other. The central axes of the revolute pairs between the end link members 5 and 6 and the intermediate link member 7 may form a certain intersection angle, or may be parallel to each other.

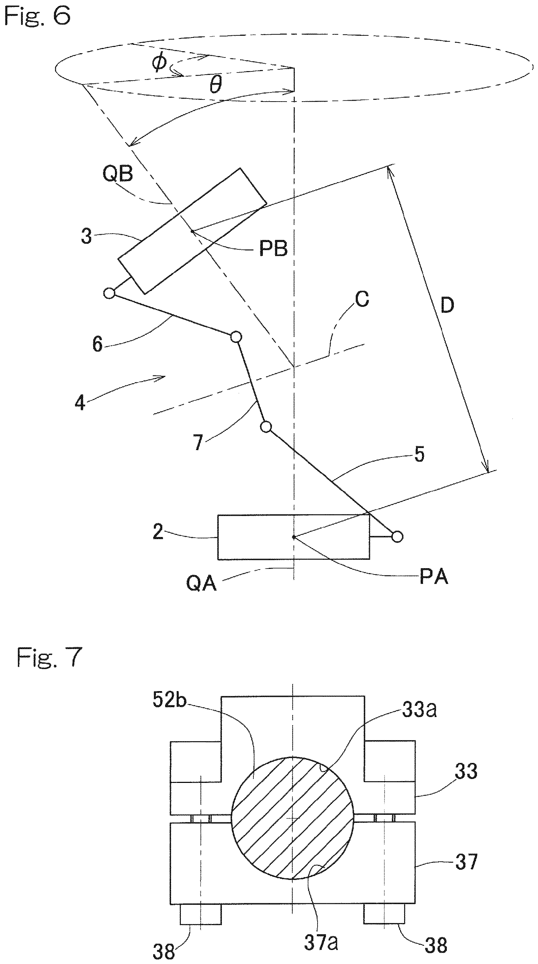

The three link mechanisms 4 have a geometrically identical configuration. The geometrically identical configuration means that, as shown in Fig. 6, a geometric model depicted with straight lines representing the link members 5, 6, and 7, that is, a model depicted with the revolute pairs and straight lines connecting these revolute pairs, represents a shape in which the proximal end side portion thereof and the distal end side portion thereof are symmetrical with each other with respect to the center portion of the intermediate link member 7. Fig. 6 is a diagram showing one link mechanism 4 of the link actuator 1 depicted with straight lines. Each link mechanism 4 according to this embodiment is of a rotation symmetrical type, and has a positional configuration in which the positional relationship between the proximal end side link hub 2 and the proximal side end link member 5, and the distal end side link hub 3 and the distal side end link member 6, is in rotation symmetry relative to a center line C of the intermediate link member 7.

The proximal end side link hub 2, the distal end side link hub 3, and the three link mechanisms 4 form a two-degrees-of-freedom mechanism in which the distal end side link hub 3 is rotatable about two mutually orthogonal axes, relative to the proximal end side link hub 2. In other words, the mechanism allows the distal end side link hub 3 to rotate with two degrees of freedom to change its position, relative to the proximal end side link hub 2. This two-degrees-of-freedom mechanism is compact in size, but can achieve a wide range of movement of the distal end side link hub 3 relative to the proximal end side link hub 2. In addition, since the two-degrees-of-freedom mechanism is compact in size, quick motion can be made.

For example, when straight lines that pass through the spherical link centers PA and PB and that intersect the central axes of the respective revolute pairs between the link hubs 2 and 3 and the end link members 5 and 6 at a right angle are defined as link hub central axes QA and QB, the maximum value of a bend angle θ (maximum bend angle) between the proximal end side link hub central axis QA and the distal end side link hub central axis QB can be about ±90°. In addition, an angle of traverse ϕ of the distal end side link hub 3 relative to the proximal end side link hub 2 can be set in the range of 0° to 360°. The bend angle θ means a vertical angle formed when the distal end side link hub central axis QB is inclined relative to the proximal end side link hub central axis QA. The angle of traverse ϕ means a horizontal angle formed when the distal end side link hub central axis QB is inclined relative to the proximal end side link hub central axis QA. Even when the position of each link mechanism 4 is changed, the distance D between the proximal and distal end side spherical link centers PA and PB does not change.

In each link mechanism 4, if the angular positional relationships between the intermediate link member 7 and the end link members 5 and 6 with respect to the symmetry plane of the intermediate link member 7 are made identical between the proximal end side and the distal end side, when: the angles and the distances of the central axes of the revolute pairs between the link hubs 2 and 3 and the end link members 5 and 6 in each link mechanism 4 are equal to each other; the central axes of the revolute pairs between the link hubs 2 and 3 and the end link members 5 and 6 and the central axes of the revolute pairs between the intermediate link member 7 and the end link members 5 and 6 in each link mechanism 4 intersect the spherical link centers PA and PB at the proximal end side and the distal end side; the geometrical shapes of the proximal side end link member 5 and the distal side end link member 6 are the same; and the shape of the intermediate link member 7 is the same between the proximal end side and the distal end side, the proximal end side link hub 2 and the proximal side end link member 5, and the distal end side link hub 3 and the distal side end link member 6 move in the same manner due to the geometrical symmetry.

As shown in Fig. 4, the proximal end side link hub 2 includes: a flat plate-shaped base 10 formed with a circular through hole 10a in a center portion thereof, and having a portion that is a stage mounted portion 10b fixed to the Y-axis linear motion actuator 61 (Fig. 1); three support shaft mounting members 11 provided equidistantly in the circumferential direction around the through hole 10a of the base 10; and three support shafts 12 mounted on the respective support shaft mounting members 11.

The proximal side end link member 5 is rotatably supported at one end thereof by each of the support shafts 12 via two bearings 14. In addition, a rotation shaft 16 provided at one end of the intermediate link member 7 is rotatably supported by the other end of the proximal side end link member 5 via two bearings 15. Each of the bearings 14 and 15 is, for example, a ball bearing such as a deep groove ball bearing and an angular contact ball bearing, and is fixed in a state where a predetermined amount of preload is applied by tightening with a nut. The angle α formed by the central axis O1 of the revolute pair between the proximal end side link hub 2 and the proximal side end link member 5 and the central axis O2 of the revolute pair between the proximal side end link member 5 and the intermediate link member 7 is less than 90°. In the shown example, the angle α is 45°.

The base 10 is provided with position change actuators 20 and speed reduction mechanisms associated with each of the three link mechanisms 4, the position change actuator 20 being configured to rotate the proximal side end link member 5 to arbitrarily change the position of the distal end side link hub 3 relative to the proximal end side link hub 2, and the speed reduction mechanism 21 being configured to transmit motion of the position change actuator 20 to the proximal side end link member 5 while reducing the speed of the motion. The position change actuator 20 is a rotary actuator, more specifically, a servomotor with a speed reducer 20a and is fixed to the base 10 by a motor fixing member 22. The speed reduction mechanism 21 includes a speed reducer 20a of the position change actuator 20 and a gear type speed reducing unit 23. The position change actuator 20 and the speed reduction mechanism 21 may be provided for each of only two of the three link mechanisms 4. When the position change actuator 20 and the speed reduction mechanism 21 are provided for each of the two link mechanisms 4, the position of the distal end side link hub 3 relative to the proximal end side link hub 2 can be determined.

The gear type speed reducing unit 23 includes: a small gear 26 that is coupled to an output shaft 20b of the position change actuator via a coupling 25 in a rotation transmittable manner; and a large gear 27 that is fixed to the proximal side end link member 5 and meshed with the small gear 26. The small gear 26 has shaft portions at both sides thereof, and these shaft portions are each rotatably supported by a rotation support member 28 fixed to the base 10, via two bearings 29. In the shown example, the small gear 26 and the large gear 27 are spur gears, and the large gear 27 is a sector gear having gear teeth formed only on the peripheral surface of the arc portion thereof. The large gear 27 has a pitch circle radius larger than that of the small gear 26. Rotation of the output shaft 20b of the position change actuator 20 is transmitted to the proximal side end link member 5 as rotation about the rotation axis O1 of the revolute pair between the proximal end side link hub 2 and the proximal side end link member 5 while the speed of the rotation is reduced. The speed reduction ratio may be set to, for example, 10 or higher.

In this example, the spur gears are used in the speed reduction mechanism 21, but other types of mechanism (for example, bevel gears or a worm mechanism) may be used. In addition, in this example, the large gear 27 is formed as a member separate from the proximal side end link member 5, but may be integrated with the proximal side end link member 5.

The rotation axis of the position change actuator 20 and the rotation axis of the small gear 26 are located on the same axis. The rotation axes are parallel to the axis O1 of the revolute pair between the proximal end side link hub 2 and the proximal side end link member 5 and have the same height from the base 10.

As shown in Fig. 5, the distal end side link hub 3 includes: an annular-disc-shaped distal end member 30 having a circular through hole 30a at a center portion thereof; three support shaft mounting members 31 provided equidistantly in the circumferential direction around the through hole 30a of the distal end member 30; and three support shafts 32 mounted on the respective support shaft mounting members 31. A torch mounting member 33 is provided at one location on the outer peripheral portion of the distal end member 30 so as to be fixed by means of a bolt or the like.

The distal side end link member 6 is rotatably supported at one end thereof by each of the support shafts 32 via two bearings 34. Moreover, a rotation shaft 36 provided at the other end of the intermediate link member 7 is rotatably supported by the other end of the distal side end link member 6 via two bearings 35. Each of the bearings 34 and 35 is, for example, a ball bearing such as a deep groove ball bearing and an angular contact ball bearing, and is fixed in a state where a predetermined amount of preload is applied by tightening with a nut. The angle β formed by the central axis O3 of the revolute pair between the distal end side link hub 3 and the distal side end link member 6 and the central axis O4 of the revolute pair between the distal side end link member 6 and the intermediate link member 7 is equal to the angle α.

The link actuator 1 is mounted on a downward facing stage of the Y-axis linear motion actuator 61 by fixing the distal end side surface of the stage mounted portion 10b of the base 10 by means of a bolt or the like such that the proximal end side link hub 2 is located at the lower side, the distal end side link hub 3 is located at the upper side, and the proximal end side link hub central axis QA is oriented in the up-down direction as shown in Fig. 1. Accordingly, the link actuator 1 can be moved on a plane (a horizontal plane in this example) orthogonal to the proximal end side link hub central axis QA, by causing the X-axis linear motion actuator 60 and the Y-axis linear motion actuator 61, which are orthogonal to each other, to advance/retract.

As shown in Fig. 3, the welding torch 52 has a curved portion 52a and is mounted on the torch mounting member 33 of the distal end member 30. Specifically, as shown in Fig. 7, a cylindrical held portion 52b of the welding torch 52 is fitted into a recess 33a, having a semicircular cross-sectional shape, of the torch mounting member 33, and a torch holding member 37 is placed thereon from the side opposite to the torch mounting member 33 such that the held portion 52b of the welding torch 52 is fitted into a recess 37a, having a semicircular cross-sectional shape, of the torch holding member 37, and the torch mounting member 33 and the torch holding member 37 are connected to each other by bolts 38. Accordingly, the held portion 52b is held between the torch mounting member 33 and the torch holding member 37, whereby the welding torch 52 is fixed. The central axis of a tip portion of the fixed welding torch 52 coincides with the distal end side link hub central axis QB. The welding torch 52 mounted on the distal end side link hub 3 as described above is disposed between two link mechanisms 4 of the three or more link mechanisms, and the tip portion thereof is directed to the proximal end side and projects to the proximal end side with respect to the proximal end side link hub 2.

In Fig. 1, the two cables 56 and 57 extend from a base end portion of the welding torch 52 and are connected at leading ends thereof to the wire supply device 54 and the cooling water device 55, respectively. The wire supply device 54 is a device that sends out a wire at an arbitrary speed to the welding torch 52 in response to a command from a welding machine controller (not shown), and the wire is supplied through the interior of the cable 56 to the welding torch 52. The cooling water device 55 is a device that supplies cooling water for cooling the tip portion of the welding torch 52, and the cooling water is supplied through the interior of the cable 57 to the welding torch 52. In addition, a pipe or the like (not shown) that supplies a shielding gas is also connected to the welding torch 52.

A work 58 that is an object to be worked includes, for example, a cylindrical work 58a and a block 58b to which the cylindrical work 58a is to be connected by means of welding. The work 58 is placed below the link actuator 1. The height of the work 58 may be adjustable by a jack mechanism or the like. In addition, the work 58 may be placed directly on the ground.

The automatic welding machine W performs welding on the work 58 with the welding torch 52, which is mounted on the distal end side link hub 3, while causing the X-axis linear motion actuator 60 and the Y-axis linear motion actuator 61 to advance/retract to move the link actuator 1 on the horizontal plane, and operating the link actuator 1 to change the position of the distal end side link hub 3 relative to the proximal end side link hub 2. Accordingly, welding can be performed on surfaces of the work 58 in a plurality of directions at angles formed relative to the work 58. In addition, the link actuator 1 having the welding torch 52 mounted thereon has a wide movable range of the distal end side link hub 3 and can make quick motion as described above, and thus can achieve fine motion of the tip of the welding torch 52 at high speed. Therefore, precise welding work can be performed on the work 58. Furthermore, since the wire supply device 54 is provided, even when the distance between the tip portion of the welding torch 52 and the work 58 is varied due to operation of the link actuator 1, stable welding can be achieved.

Force is applied to the cables 56 and 57, which connect the welding torch 52 to the wire supply device 54 and the cooling water device 55, due to the above welding motion, that is, the movement of the link actuator 1 on the horizontal plane and the position change of the link actuator 1. However, since the wire supply device 54 and the cooling water device 55 are mounted on the movement mechanism 53 which is passively movable in one or more axial directions, the wire supply device 54 and the cooling water device 55 are moved by the force applied to the cables 56 and 57, in a direction in which the force is alleviated, whereby tension being applied to the welding torch 52 is reduced. Thus, a decrease in the accuracy of positioning the tip of the welding torch 52 is avoided. The movement mechanism 53 may be configured to be actively movable in response to force applied to the cables 56 and 57, by being equipped with an actuator or the like.

Since the X-axis linear motion actuator 60 and the Y-axis linear motion actuator 61 are provided so as to advance/retract on the plane orthogonal to the proximal end side link hub central axis QA, welding work is easily performed on the plane orthogonal to the proximal end side link hub central axis QA, for example, on a horizontal plane. In addition, since the welding torch 52 is mounted such that the central axis of the tip portion thereof coincides with the distal end side link hub central axis QB, the angle of the distal end side link hub 3 and the angle of the tip portion of the welding torch 52 are equal to each other, so that the position of the tip portion of the welding torch 52 is easily controlled.

The welding torch 52 often has an elongated shape. Thus, when the welding torch 52 is mounted such that the tip portion thereof is directed to the distal end side with respect to the distal end side link hub 3, moment of inertia increases, which may cause a decrease in movement speed or deterioration of the accuracy of positioning (not shown). However, in the automatic welding machine W, the welding torch 52 is mounted such that the tip portion thereof is directed to the proximal end side link hub 2 side with respect to the distal end side link hub 3 and projects to the proximal end side with respect to the proximal end side link hub 2. In this configuration, the position of the tip portion of the welding torch 52 is close to the rotation center of the link actuator 1, and thus moment of inertia of the welding torch 52 can be reduced, so that high-speed motion and high accuracy of positioning can be achieved. In addition, the tip portion of the welding torch 52 among the components of the link actuator 1 is located at the lowest portion, and thus the automatic welding machine W and the work 58 are unlikely to interfere with each other.

Since the angles α and β formed by the central axes O1 and O2 of the revolute pairs between the proximal and distal end side link hubs 2 and 3 and the proximal and distal side end link members 5 and 6 and the central axes O3 and O4 of the revolute pairs between the proximal and distal side end link members 5 and 6 and the intermediate link member 7 are less than 90°, a wide space can be ensured inside an arrangement of the respective link mechanisms 4. Thus, the welding torch 52 is easily disposed in the space inside the arrangement of the respective link mechanisms 4.

Since the welding torch 52 of this embodiment has a curved shape in an intermediate portion thereof, when the central axis of the tip portion of the welding torch 52 coincides with the distal end side link hub central axis QB, the base portion of the welding torch 52 is located outside the arrangement of the respective link mechanisms 4. Since the welding torch 52 is disposed between the arbitrary two link mechanisms 4, interference of the welding torch 52 with each link mechanism 4 is avoided. Accordingly, even when the welding torch 52 is disposed inside the arrangement of the respective link mechanisms 4, size increase of the link actuator 1 can be prevented.

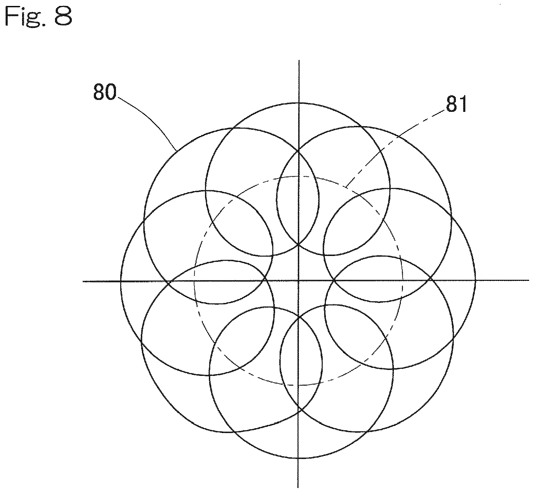

Fig. 8 shows an example of welding performed using this automatic welding machine. The automatic welding machine makes a weaving motion along a welding track 80 that extends in an advance direction while drawing circles with respect to a reference line 81 located near a desired welding position. When the automatic welding machine is used, welding tracing the welding track 80 can be easily performed by: the linear motion mechanism 51 making a motion along the reference line 81; and the link actuator 1 making a motion drawing circles. Since the motion along the reference line 81 and the motion drawing circles are made by different mechanisms as described above, both motions can be easily simultaneously controlled. In addition, since the wire supply device 54 and the cooling water device 55, which are peripheral devices, are mounted on the passively movable movement mechanism 53, distortion of the welding track 80 can be reduced, so that the accuracy of positioning is improved. When such a weaving motion is made, since the direction of the track continuously changes, the movement speed is not rapidly changed, and high-speed smooth motion can be achieved.

In this example, the reference line 81 is a circle, but may be another track reference line. In addition, the welding track 80 may be entirely generated by track calculation, or may be generated by: producing the reference line 81 by teaching; and designating a diameter of weaving.

Hereinafter, other embodiments of the present invention will be described.

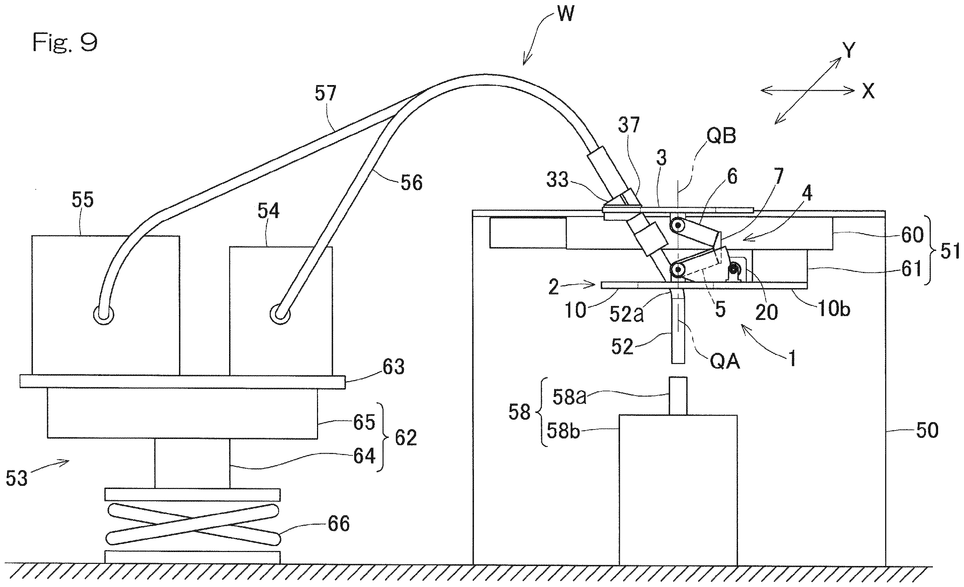

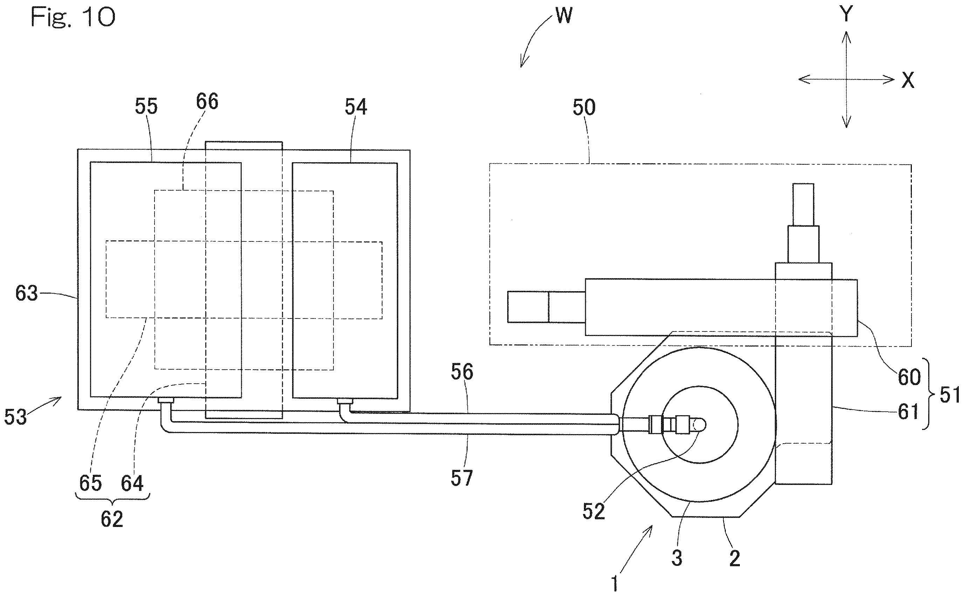

An embodiment shown in Fig. 9 and Fig. 10 is different from the embodiment in Fig. 1 and Fig. 2 in the configuration of the movement mechanism 53. Specifically, in the movement mechanism 53 of the embodiment in Fig. 9 and Fig. 10, in addition to the XY stage 62 of the movement mechanism 53 of the embodiment in Fig. 1 and Fig. 2, a Z stage 66 that can passively move the base 63 in the up-down (vertical) direction (a Z-axis direction) is added. The Z stage 66 is mounted on the ground, the XY stage 62 is mounted on the Z stage 66, and the base 63 is provided on the upper surface of the XY stage 62. The other configuration is the same as in the embodiment in Fig. 1 and Fig. 2.

The Z stage 66 includes a spring having resilience, or the like, and has a function to reduce tension in the perpendicular direction applied to the welding torch 52 due to position change of the link actuator 1 or movement of the link actuator 1 on the horizontal plane by the linear motion mechanism 51. Alternatively, the Z stage 66 may be configured to automatically move in response to position change of the link actuator 1 or movement of the link actuator 1 on the horizontal plane. The configuration of the Z stage 66 and the XY stage 62 may be another configuration as long as the Z stage 66 and the XY stage 62 passively move in response to the welding motion.

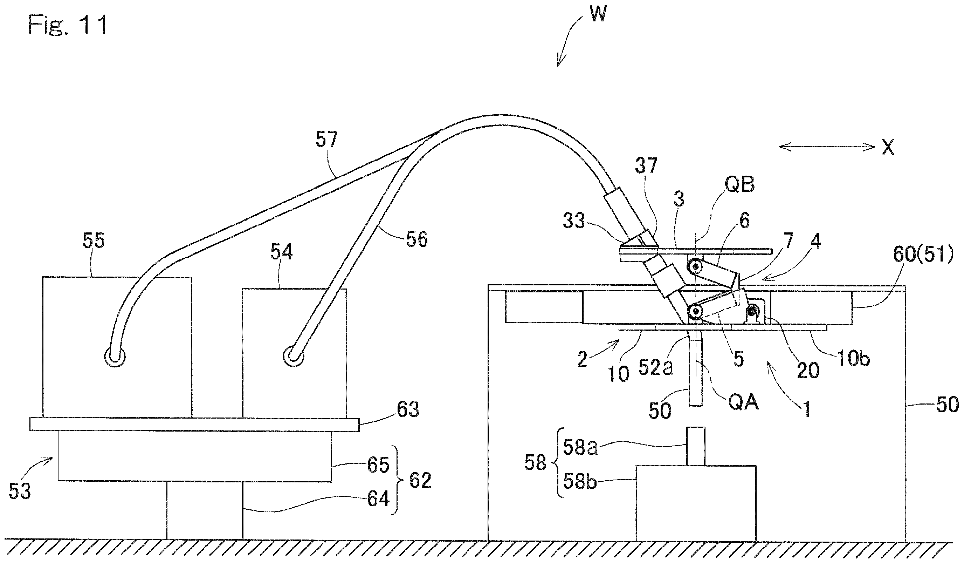

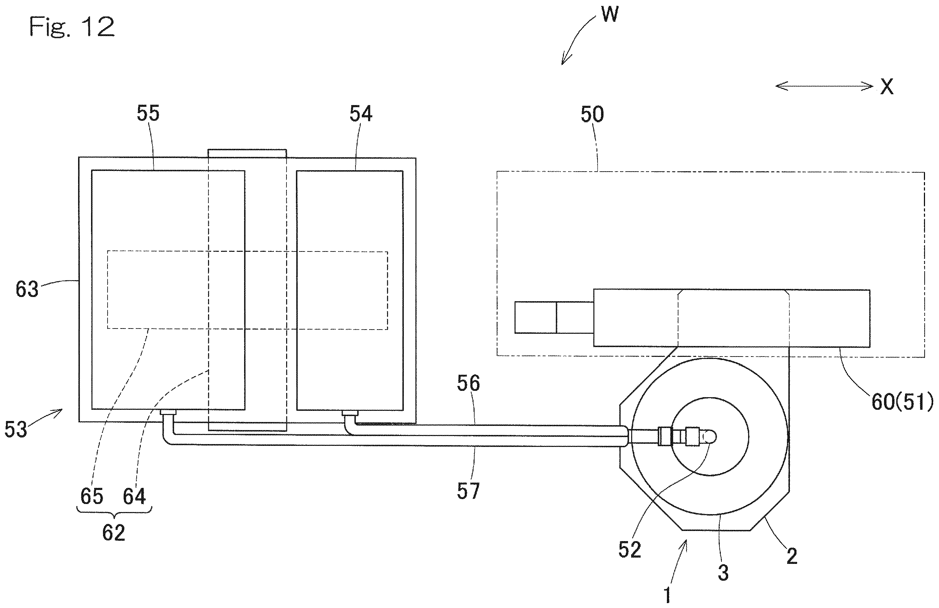

An embodiment shown in Fig. 11 and Fig. 12 is different from the embodiment in Fig. 1 and Fig. 2 in the configuration of the linear motion mechanism 51. Specifically, the linear motion mechanism 51 of the embodiment in Fig. 11 and Fig. 12 is composed of only the X-axis linear motion actuator 60. The other configuration is the same as in the embodiment in Fig. 1 and Fig. 2.

Also, in the automatic welding machine W in which the linear motion mechanism 51 includes one linear motion actuator 60 as described above and which performs welding only in one direction, that is, in the X-axis direction, tension in the Y-axis direction due to position change of the link actuator 1 can be reduced, since the movement mechanism 53 which can passively move the wire supply device 54 and the cooling water device 55 in two axial directions is provided.

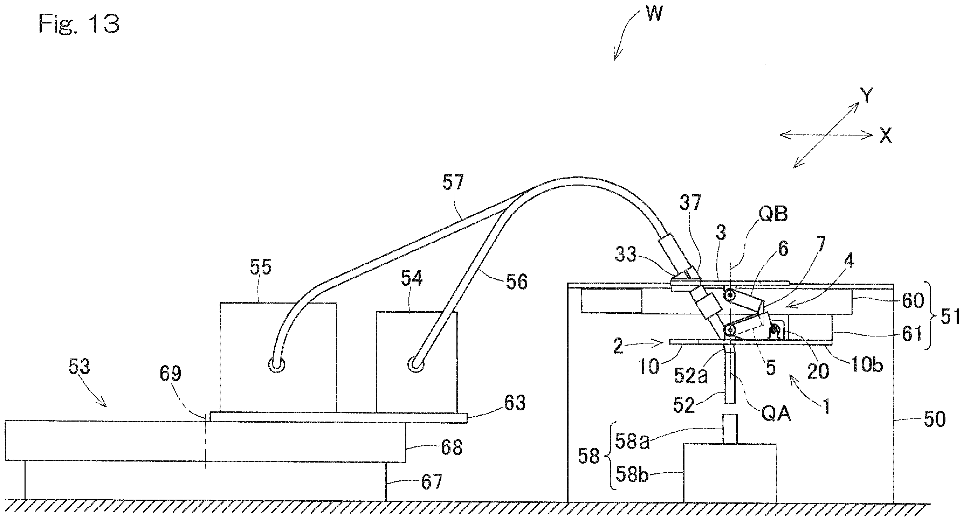

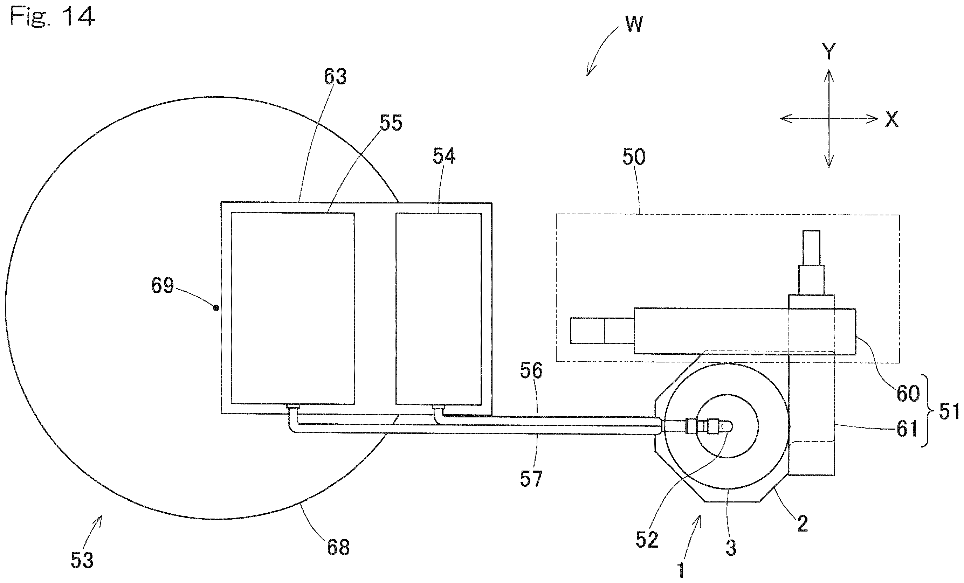

In an embodiment shown in Fig. 13 and Fig. 14, the movement mechanism 53, which can passively move the peripheral devices, is formed as a one-axis rotating mechanism. Specifically, a rotary table 68 is provided on a pedestal 67, which is mounted on the ground, so as to be rotatable about a rotation axis 69 extending in the vertical direction, and the base 63, on which the wire supply device 54 and the cooling water device 55 as the peripheral devices are mounted, is provided on the upper surface of the rotary table 68 and at a position offset from the rotation axis 69. The base 63 may be disposed on the rotation axis 69 of the rotary table 68. The rotation axis 69 extending in the vertical direction is perpendicular to a horizontal plane that is a plane including the axes of the respective X-axis and Y-axis linear motion actuators 60 and 61 of the linear motion mechanism 51. The other configuration is the same as in the embodiment in Fig. 1 and Fig. 2.

Even when the movement mechanism 53 is a one-axis rotating mechanism as described above, passive movement is enabled to some extent. That is, the wire supply device 54 and the cooling water device 55 can be moved by the movement mechanism 53, similar to some extent to the advancing/retracting movement of the link actuator 1 by the linear motion actuators 60 and 61. Accordingly, similar to the above, tension being applied to the welding torch 52 due to a welding motion can be reduced, so that a decrease in the accuracy of positioning the tip of the welding torch 52 can be prevented. Since the rotating mechanism is a mechanism with a degree of freedom in one axis, the rotating mechanism has a simple structure and can be produced at low cost.

Although the modes for carrying out the present invention have been described on the basis of the embodiments, the embodiments disclosed herein are illustrative in all aspects and not restrictive. The scope of the present invention is indicated by the claims, rather than by the above description, and is intended to include any modifications within the scope and meaning equivalent to the claims.

### [Reference Numerals]

- 1: link actuator
- 2: proximal end side link hub
- 3: distal end side link hub
- 4: link mechanism
- 5: proximal side end link member
- 6: distal side end link member
- 7: intermediate link member
- 20: position change actuator
- 50: mount
- 51: linear motion mechanism
- 52: welding torch
- 53: movement mechanism
- 54: wire supply device (peripheral device)
- 55: cooling water device (peripheral device)
- 56, 57: cable
- 60: X-axis linear motion actuator
- 61: Y-axis linear motion actuator
- W: automatic welding machine

## Claims

1. An automatic welding machine comprising:
a link actuator including three or more link mechanisms coupling a distal end side link hub to a proximal end side link hub such that a position of the distal end side link hub can be changed relative to the proximal end side link hub,
each link mechanism including a proximal side end link member pivotably coupled at one end thereof to the proximal end side link hub, a distal side end link member pivotably coupled at one end thereof to the distal end side link hub, and an intermediate link member with its opposite ends pivotably coupled to the other end of the proximal side end link member and to the other end of the distal side end link member, respectively,
a position change actuator configured to arbitrarily change the position of the distal end side link hub relative to the proximal end side link hub, the position change actuator being provided in each of two or more link mechanisms of the three or more link mechanisms;
one or more linear motion actuators configured to cause the proximal end side link hub of the link actuator to advance/retract relative to a mount along respective axes;
a welding torch mounted on the distal end side link hub; and
a movement mechanism on which peripheral devices connected to the welding torch via cables are mounted so as to be movable in one or more axial directions.

2. The automatic welding machine as claimed in claim 1, wherein the automatic welding machine is an automatic welding machine with MIG welding, and at least one of the peripheral devices is a wire supply device configured to send a welding wire to the welding torch.

3. The automatic welding machine as claimed in claim 1 or 2, wherein the movement mechanism is configured to passively move the peripheral devices, a direction in which the movement mechanism passively moves the peripheral devices coincides with a direction in which each linear motion actuator causes the link actuator to advance/retract, and the number of axial directions in which the movement mechanism passively moves the peripheral devices is equal to the number of axial directions in which the linear motion actuators cause the link actuator to advance/retract.

4. The automatic welding machine as claimed in claim 1 or 2, wherein the movement mechanism is a rotating mechanism configured to rotate about an axis in a direction perpendicular to a plane including axes of the one or more linear motion actuators.
